# EUROPEAN PATENT SPECIFICATION

(11) **EP 2 807 402 B1**
(45) Date of publication and mention of the grant of the patent: **04.09.2019**
(21) Application number: 13718029.5
(22) Date of filing: 22.03.2013
(51) Int. Cl.: F16H 15/38

(54) **VARIATOR**
VARIATOR
VARIATEUR

(30) Priority: 23.01.2012 GB 201201068; 26.03.2012 GB 201205297
(43) Date of publication of application: 03.12.2014
(73) Proprietor: Allison Transmission, Inc., Indianapolis, IN 46222 (US)
(72) Inventor: DE FREITAS, Andrew, Standish, Wigan WN6 0RS (GB); DUTSON, Brian, Astley, Tyldesley, Manchester M29 7PT (GB)
(74) Representative: HGF Limited
(86) International application number: PCT/GB2013/000129
(87) International publication number: WO 2013/110920

(56) References cited:
- EP-A2- 1 316 744
- WO-A2-2008/038043
- JP-A- H09 324 841
- JP-A- 2000 046 145
- JP-A- 2003 307 262

## Description

### Background

This invention relates to variators. More specifically, it relates to variators that are components of a mechanical transmission system.

In this context, a variator is a transmission component that interconnects two rotatable elements whereby, when rotating, the two elements have rotational speeds related to one another by a ratio (referred to as the "variator ratio") that can vary between a minimum variator ratio and a maximum variator ratio in a substantially stepless manner. In particular, this invention relates to a variator transmission having a take-off drive which imparts a radial force in a direction perpendicular to the axis of the variator.

### Full toroidal variators

A range of variators are known as "full-toroidal" variators. A full-toroidal variator comprises an input race and an output race within the variator and the races rotate about a common axis (the "variator axis"). Each race, which is typically in the form of a disc, has a working surface, arranged such that the working surfaces face one another in a direction parallel to the variator axis. An annular recess of arcuate cross-section is formed within each working surface, coaxial with the variator axis. The recesses are positioned substantially at the same radius with respect to the variator axis (the "toroidal radius"), and are arranged such that their cross sections lie on a common hypothetical circle, the plane of which intersects the variator axis and the centre of which is in a plane (the "centre plane") parallel to and spaced equally between the working surfaces. By extending the hypothetical circle around the variator axis, a hypothetical torus is described, the working surfaces occupying opposite regions of the boundary of the torus. Therefore, the space between the working surfaces of the races is referred to as the "toroidal cavity".

The rotatable elements are mounted so as to roll on the surface of the races and are herein referred to as rolling elements or rollers. Several rolling elements are provided within the toroidal cavity. Each rolling element has a rolling surface that makes contact with (subject to the discussion below) a respective working surface of the two races. Each rolling element is carried in a respective carriage such that it can rotate with respect to the carriage about a rolling axis upon which the rolling surface is centred.

Rotation of one of the races (called the "input race" in this discussion) with respect to the carriages causes each rolling element to rotate, and this, in turn causes the other race (called the "output race" in this discussion) to rotate in a direction opposite to the rotation of the input race. If the output race is allowed to rotate in response to the applied torque, it will do so in a direction opposite to that of the input race. During such rotation, each rolling element will make contact with the input race and the output race about a respective circular contact locus described on the respective working surfaces. If these two loci are of the same radius, then output race and the input race will have the same rotational speeds (albeit in opposite directions). However, if the radius of the locus on the input race (the "input radius") unequal the radius of the locus on the output race (the "output radius"), then the speed of the output race will be greater than or lesser than the speed of the input race. In general, the variator ratio will be equal to the ratio of the input radius to the output radius.

Each carriage is configured such that the rolling axis can be moved to alter the input and the output radii, this movement being referred to as "tilt". At least when the variator is operating in an equilibrium condition, the input and the output radii are symmetrically disposed about the toroidal radius.

The foregoing description refers to contact between the working surfaces and the rolling elements. However, this is a simplification. Most embodiments of toroidal variators operate using traction drive. That is to say, the working surfaces and rolling elements are at least partially immersed in a traction fluid. This has the property of having a viscosity that increases rapidly when its pressure exceeds a threshold. As the races rotate, traction fluid is drawn into the nips formed between the rolling elements and the working surfaces to create a thin layer of traction fluid between the rolling surfaces and the working surfaces, so there is, literally speaking, no contact between them. In order to achieve a satisfactory traction drive, an end load is applied, which urges the races towards one another along the variator axis. The end-load is optimised to balance the requirement of providing sufficient loading to produce adequate traction at the interfaces between the working surfaces and the rolling surfaces, but low enough not to compromise the efficiency and durability of the variator. In many embodiments, the races may make slight movements along the variator axis in response to the end-load.

Within the general arrangement of a full-toroidal variator described above, a great many variations are possible concerning control, mounting and freedom-of-movement of the carriages, number and configuration of races, number and configuration of rolling elements, and so on.

The use of the terms "input" and "output" to define the races should be taken as a functional or structural limitation relating to these components - they are simply labels. The variator may be entirely symmetrical in operation. These will typically be chosen to provide a concise and understandable description in a particular context. For example, in the case of transmission for a vehicle, the input will typically be connected to a prime mover, and the output will typically be connected to a final drive system to indicate the normal direction of power flowing through the variator. However, it will be understood that when the vehicle is in an overrun condition, engine braking will actually cause power to flow from the output to the input of the variator.

In the remainder of this specification, the term "variator" will refer to a full-toroidal variator as described above, unless the context indicates otherwise.

### Variator control

There are two main strategies used to control a variator: torque control and ratio control.

Torque control has no direct equivalent in multiple-speed transmissions because it relies upon a feature arising from the nature of a variator. Torque control has been described in many publications, including those parts of WO-A-2010/070341 that relate to Figures 1 to 3, and will be described here only briefly, as required to enable the present invention to be understood.

Torque control relies upon the variator having several design features:
- each carriage has freedom to rotate about a reaction axis that is inclined by a small angle to the centre plane; and
- each carriage can move axially along the reaction axis against a force applied to it by an actuator.

Note that the first of these requirements means that while under torque control, tilt angle is not controlled directly by an actuator.

Each race applies a force to each rolling element that acts in a direction tangential to the working surface. Therefore, equal and opposite tangential forces must be provided by each actuator to maintain the rolling axis of the corresponding rolling element stationary along the reaction axis. If the force applied by the actuator changes, the forces acting on the carriage become imbalanced, so the rolling axes will move. The geometry of the variator is configured (using considerations that will not be discussed here) such that upon movement along the reaction axis, a couple is generated about the reaction axis that causes the carriage to rotate. This changes the tilt angle, and therefore the variator ratio, in such a way as to reduce the imbalance of forces acting on the carriage. The carriage will therefore move asymptotically towards a new tilt angle at which the forces return to balance, the variator ratio changing as this happens. Thus, the force applied by the actuator determines the torque that will be developed across the variator, with the variator adopting the variator ratio that is required to achieve that torque.

Ratio control bears the nearest similarity to the control of a transmission with multiple discrete, spaced ratios. In a ratio-control arrangement, the roller and carriage displacements are controlled by means which are not responsive to the reaction forces experienced by the roller carriages. The fundamental operating principle of ratio control is that a control system determines the variator ratio required to achieve a desired operating condition and operates actuators to move the carriages in such a way as to directly cause the rolling axes to tilt to the angle required to achieve the target ratio.

### Introduction to the Invention

Toroidal variators may be used in a wide range of applications including those requiring a high power density for example vehicle main-drive transmissions and in auxiliary drives, and lower power density applications for example in lawn mowers. Conventionally, in order to be able to transmit the required levels of power with the required level of mechanical efficiency, especially in high power density applications, a variator having dual toroidal cavities with three rollers per cavity may be employed. The rollers may have independent roller control mechanisms or the roller control mechanisms may be linked so as to share load evenly between the two cavities. The cost and complexity associated with such variators is correspondingly greater than with a single toroidal cavity variator. Further, the size of the variator housing required to accommodate the individual control mechanisms may be unduly large and the exterior shape may be undesirable with parts protruding from the housing at undesirable angles. This may give rise to packaging challenges when incorporating the variator into applications such as vehicle main drive transmissions and auxiliary drives. In order to reduce the weight, complexity, cost and packaging difficulties, it would be advantageous to adopt an arrangement that includes two and only two rollers in each of one or two cavities.

The output of the variator may be harnessed through a mechanism disposed radially of the variator axis and which is operatively coupled to one or more output discs of the variator or to other means, for example a gear on the output shaft or on a circumferential surface of the output disc. By way of example, an output disc having gear teeth on its circumferential surface may be meshed with a gear mounted radially of the variator axis from which power is taken for use. Arrangements in which power is harnessed through the agency of a chain in a plane perpendicular to the variator axis are also known. Such take-off drive arrangements impart a force to the output disc, gear or the like in a direction normal to the axis of the variator. This force places the input shaft and rollers under a radial load and, as the shaft and rollers act as a beam, may cause the shaft and rollers to bend such that the distant side of the input shaft is in tension and the nearer side is in compression.

The bending moment applied to the shaft and rollers is accommodated by differing contact normal loads between the discs and rollers, depending on the location of the disc-roller contact points. Where a sprocket and chain arrangement are employed as the take-off drive, the rollers located on the same side of the variator as the take-off drive are typically unloaded and where a gear arrangement is employed, the far-side rollers are typically unloaded. The rollers therefore may be subject to different contact normal forces leading to problems with poor transfer of drive and traction and "overclamping", leading to reduced durability. This problem has been addressed by providing a variator output disc support, but this may add weight, or be expensive or impractical due to packaging limitations,

WO 2008038043 A2 discloses in its Fig.1 a variator which, in the opinion of the examining division of the European Patent Office, falls within the pre-characterizing portion of claim 1.

### Summary of the Invention

The present invention aims to solve this problem by ameliorating the adverse effects of distortion or flexing without adding to the complexity, weight or expense of the variator.

The present inventors have realised that this can be achieved by mounting the rollers within the toroidal cavity such that the disc-roller contact points generally lie in a plane which is substantially perpendicular to the direction of the radial force generated by the contact between the take-off drive and the output drive of the variator and which plane preferably passes through the variator axis.

The invention provides a variator according to claim 1. The dependent claims concern particular embodiments of the invention.

At one particular ratio, the roller/disc contact points lie generally in a plane which is substantially perpendicular to the radial force. One or more of the contact points may fall slightly away from a plane through the majority of the roller/disc contact points to encompass practical operation as the variator ratio changes and having regard to other factors such as balancing of load between rollers and this is reflected by reference to the roller/disc contact points lying "generally" in the said plane. It will therefore be understood that the term is to be interpreted having regard to the function of roller/disc contact points being in a general planar relationship and wherein the plane is substantially perpendicular to the radial load and does not mean or imply any strict mathematical compliance. Since this place lies on or close to the neutral axis of bending of the variator structure, the result is that that both normal contact loads between the discs and the two rollers of each cavity of the variator will be generally the same.

The plane of the roller/disc contact points is suitably substantially perpendicular to the radial force. The plane preferably passes through the variator axis or sufficiently close to the variator axis whereby the roller/disc contact points substantially unaffected by the radial load from the take-off drive.

The input and output surfaces defining the toroidal cavity are suitably formed on an input disc and an output disc respectively.

The variator suitably comprises an input shaft upon which the input disc is mounted and a coaxial output shaft upon which the output disc is mounted. The input and output shafts define the variator axis.

Suitably, the variator comprises an output drive through which the take-off drive is operatively engaged with the output disc. The output drive is suitably mounted for coaxial rotation with the output disc. The output drive may have a different diameter to the output disc. Alternatively, the output drive may be formed on the circumferential surface of the output disc. Preferably the output drive is selected from a gear and a sprocket. The circumferential surface of the output disc may comprise teeth defining an output gear or sprocket for engagement with the take-off drive, for example a gear or a sprocket via a chain or belt, located radially to the output gear.

The output drive and take-off drive are suitably intermeshing gears but may comprise sprockets linked by a chain, a belt or any other means for transferring drive and which impart a contact force in a direction perpendicular to a plane defined by the points of contact between the two rollers and the input and output surfaces.

The rollers may be actuated together or independently. Where individual actuation is required, the rollers are suitably actuated hydraulically and the variator comprises a hydraulic roller actuator for each roller. The rollers may be mounted on a carrier. The carrier may be mounted such that it pivots or may be mounted for translational or other movement relative to the variator axis depending upon the type of roller control system required. The carrier may have radial and optionally non-radial float as described below.

The variator may comprise one, and only one input surface, output surface and toroidal cavity. Alternatively, the variator may comprise two toroidal cavities.

An embodiment of the invention provides a variator comprising a first input surface and a first output surface defining a first toroidal cavity and being coaxially mounted for rotation about a variator axis and a first pair of rollers in driving engagement with the first input and first output surfaces; a second input surface and a second output surface defining a second toroidal cavity and being coaxially mounted for rotation about the variator axis and a second pair of rollers in driving engagement with the second input and second output surfaces; a take-off drive operatively engaged with the first and second output surfaces and being disposed radially of the variator axis whereby a contact force perpendicular to and intersecting the variator axis is generated and wherein the first pair and second pair of rollers are located such that the points of contact of the respective rollers with the respective input and output surfaces at one particular ratio within the operating range of the variator generally lie in a plane which is substantially perpendicular to the direction of the contact force. Advantageously, the dual cavity variator of the invention is less complex and less costly than dual cavity variators in which each roller is controlled independently. The variator also provides a more compact exterior size and shape, facilitating use in applications where space may be at a premium, for example in small vehicle applications. The invention provides a dual cavity variator which is more economical to manufacture and assemble as compared to known dual-cavity variators and may be beneficially and economically employed in lower cost applications. The variator of the invention also provides for balancing of reaction torque from the two cavities enabling improved efficiency and durability of the variator. The size of the variator and undesirable protrusions from the variator housing may also be reduced by virtue of fewer actuators being required and greater flexibility in locating the control assembly may be afforded.

In further embodiments of the invention the variator does not comprise a control assembly on which the rollers in the first cavity and the rollers in the second cavity are rotatably mounted and which assembly is adapted to balance the reaction torque from the first cavity with the reaction torque from the second cavity,
The variator may be torque-controlled or ratio controlled. The rollers in the first cavity may be controlled separately or in concert with each other. The rollers in the second cavity may be controlled separately or in concert with each other, for example, each roller may be independently controlled by a respective actuator that may include a hydraulic piston. In one embodiment, the rollers in the first cavity are controlled in concert with each other but independently of the rollers in the second cavity which are also suitably controlled in concert with each other. In one embodiment, the variator comprises two toroidal cavities with each cavity having two rollers and each roller being controlled independently by a respective actuator that may include a hydraulic piston. Preferably, the rollers in the first cavity and the rollers in the second cavity are rotatably mounted on a control assembly which is adapted to balance the reaction torque from the first cavity with the reaction torque from the second cavity.

The control assembly suitably comprises a first roller carrier which carries the plurality of rollers in the first cavity, a second roller carrier which carries the plurality of rollers in the second cavity and a mechanical linkage between the first and second roller carriers whereby the reaction torque of the rollers may be balanced. The rollers are rotatably mounted on the first and second carriers. The term "carrier" is employed herein to mean a component which carries two or more rollers as in the present invention. The term "carriage" as employed herein, and as is conventional in the art, refers to a part which carries a single roller. Suitably, the control assembly controls the load applied to all the rollers simultaneously.

Where the variator is torque-controlled, the mechanical linkage is suitably mounted for rotation about a pivot point. For a ratio-controlled variator, the mechanical linkage may be pivotally mounted but need not be pivotally mounted. The mechanical linkage preferably comprises a pivotally mounted lever operatively coupled to the first and second roller carrier. The mechanical linkage suitably spans the two toroidal cavities.

The control assembly suitably enables the reaction torque of the first and second toroidal cavities to be balanced or equalized utilising the mechanical linkage between the roller carriers. Where the torques are not reacted equally, the mechanical linkage will move to cause the torque to be redistributed until balance is restored between the reaction torque from the rollers in the first cavity and the reaction torque from the rollers in the second cavity. Each roller experiences a control force that is reacted back to its carrier, this force being dependent on the roller's position, tilt, disc-roller contact normal load and the input and output surface speeds. If any roller control force on a carrier is not equal in magnitude to each of the other roller control forces on the same carrier, the carrier may translate radially within the toroidal cavity to equalize the roller control forces within that cavity. The action of roller load equalisation within a cavity, together with balancing or equalisation of the reaction torques from each cavity ensures that all roller control forces in the variator may be equalised or controlled within precise margins. The load balancing mechanism provided by the carrier assembly allows wider manufacturing tolerances of component parts in manufacture, thereby reducing cost and easing assembly.

The variator may be torque controlled or be ratio controlled.

A ratio controlled variator receives a control signal indicating a required speed ratio, and is constructed to adjust the orientation of the rollers in response to the control signal such that the desired ratio is achieved. The rollers may be oriented to a different position to provide the desired speed ratio for example by tilting the rollers. The variator suitably comprises a control input for the rollers from an external source to provide the desired drive ratio.

In one embodiment of "ratio control", the plurality of rollers within the toroidal cavity is controlled by a control member. Suitably, at least one control member is operatively coupled to the plurality of rollers on the same side of a plane that passes through the variator axis. Where there are a plurality of control members, it is further preferred that all the control members are located on the same side of a plane that passes through the variator axis. Suitably the control member imparts a component of rotation to the rollers about an axis through the roller centre and parallel to the variator axis such that the rollers pitch to a new inclination. The axis of rotation of the roller is thereby moved away from intersection with the variator axis and the roller steers to a new inclination where the roller again intersects the variator axis, thereby providing a different speed ratio.

In this mode of operation, referred to as "tilt steer", the invention advantageously enables the control member to be actuated using relatively low power. The invention further provides a variator having a control member which is capable of actuation at a power of less than 25 watts, preferably less than 20 watts, especially less than 10 watts and desirably less than 5 watts.

In the case of the dual cavity variator, a control input for the rollers in the first toroidal cavity and/or the second toroidal cavity is suitably provided and the variator further comprises means for sensing a reaction torque in the first roller carrier and second roller carrier and means for modifying the control input in response to the difference between the two reaction torques sensed through the means for sensing the reaction torque. The control input suitably comprises an external input to the roller carriers separately from the mechanical linkage. The input to the carriers may comprise input exclusively from the external input or comprise input from the external input and from the mechanical linkage. The mechanical linkage acts as the sensing means to provide information from which the external input to the carriers may be derived.

In a torque controlled variator a signal is provided indicating a required variator reaction torque, typically by the application of force to the roller carriages for example by hydraulic means, this being the sum of the torques at the input and output of the variator. Reaction torque is the net torque tending to rotate the variator discs, and this torque must also be reacted back to the variator housing. The variator accommodates ratio changes arising from acceleration or deceleration of the engine or vehicle independently of the reaction torque.

In a dual cavity variator, the first roller carrier, second roller carrier and preferably both roller carriers are suitably each pivotally mounted about their own fulcrum or pivot point and the mechanical linkage is able to act on both roller carriers such that they pivot about their respective pivot points. Suitably, each of the carriers is pivotally mounted with a pivoting axis substantially parallel to the variator axis, and at right-angles to the principle pivoting point of the mechanical linkage. The mechanical linkage is mounted for movement in a direction which is substantially parallel to a tangent to the variator discs. The control assembly suitably comprises an actuator to move the mechanical linkage in a direction which is substantially parallel to a tangent to the variator discs. Preferably, the actuator acts on the mechanical linkage. The actuator for the mechanical linkage may be single or double acting and is preferably double-acting. The actuator may be controlled by conventional means, for example hydraulically or electrically.

Both torque and ratio controlled variators suitably comprise at least one limiting mechanism to provide an end-stop and thereby limit the travel of a mechanical component of the variator, for example a control member or a mechanical linkage of the control assembly in a dual cavity variator.

The following description applies to both torque and ratio controlled variators of the first and second aspect of the invention unless otherwise stated.

The rollers may be mounted for rotation on a carrier as described hereinbefore. A limiting mechanism may be provided to limit the movement of the roller carrier and suitably comprises a slot of limited and defined length in the housing of the variator in which the carrier fulcrum locates. Alternatively, the limiting mechanism may comprise a mechanical end-stop that is independent of the slot in the housing.

In the case of a dual cavity variator with a control assembly as described herein, the limiting mechanism suitably acts on the mechanical linkage to limit its rotational movement about the pivot point thereby providing a rotational end-stop. Limitation of the rotational movement of the mechanical linkage in the control assembly enables any large differences between carrier torques due to adverse effects of mechanical, hydraulic or other component failures to be reduced. Advantageously, any torques generated due to contact between the mechanical linkage against the limiting mechanism are borne evenly by the rollers in the first and second cavities. Suitably, the control assembly is mounted for radial float in order that loads between rollers within each of the first and second cavities may be balanced.

In a preferred embodiment, both the first roller carrier and the second roller carrier comprise a limiting mechanism. In a torque-controlled variator, the mechanical linkage suitably comprises a limiting mechanism to limit its movement in the direction tangential to the discs in both ratio and torque controlled variators, the mechanical linkage suitably has a mechanism to limit its rotation about its pivot point. Provision of a limiting mechanism for either or both the carriers advantageously provides enhanced robustness of the variator.

Suitably, each of the limiting mechanisms, whether for the mechanical linkage, actuator, the first roller carrier or second roller carrier, is a mechanical end-stop, for example a lug.

Suitably, the two rollers are mounted on a carrier which is movable radially with respect to the variator axis for example as described in EP-A-1 846 672. In another embodiment the carrier is movable in a non-radial direction as well as a radial direction, for example as described in EP-A-2 054 643. The carrier preferably comprises a pivot pin which is displaceable along a slot which extends in the radial direction relative to the variator axis of rotation. The diameter of the pivot pin is preferably substantially the same as the width of the slot, whereby the pivot pin is constrained to move in the longitudinal direction of the slot. In another embodiment, the pivot pin may be mounted in a slider block which is movable along the slot whereby the carrier may move in a direction having an exclusively radial component and also in a direction having both a radial and non-radial component. Preferably, the pivotal axis is movable through a predetermined distance in the said radial direction.

The roller carrier preferably comprises a damper. The damper suitably acts to dampen the motion of the carrier to reduce "hunting". Damping means acting in the radial direction of carrier motion may also be employed in order to reduce hunting of the carrier.

The toroidal cavity or cavities of the variator is suitably a full toroidal cavity although a semi-toroidal cavity may be employed as desired.

In a dual cavity variator of the invention, the first and second output surfaces of the variator suitably face away from each other and are both disposed between the first and second input surfaces. The first and second output surfaces may be formed on opposite sides of a single disc or may be formed on separate discs which are mounted "back-to-back" for rotation coaxially with the input shaft. Where the output surfaces are formed on separate discs, an output drive may suitably be mounted coaxially with and between the separate output discs for coaxial rotation therewith. The output drive may have a different diameter to the output discs. Where a single output disc is employed, it suitably comprises an output drive on its circumferential surface. Preferably the output drive is selected from a gear and a sprocket. The circumferential surface of the output disc may comprise teeth defining an output gear or sprocket for engagement with a take-off gear or sprocket via a chain or belt, suitably located radially to the output gear.

According to an embodiment of the invention, further rollers may be employed although these will not simultaneously have contact points in the plane defined by the contact points of the pair of rollers and will be subject to compression or tension or both due to their disc contact points lying away from the neutral axis of the variator when the perpendicular contact force is generated. However in a preferred embodiment, the variator comprises two and only two rollers per toroidal cavity.

Suitably, driving engagement between the discs and the rollers is through a traction fluid.

A variator embodying the invention is suitably a component in a transmission system that transmits power from a prime mover to a driven system, and from another aspect, the present invention provides such a transmission system. The driven system may be a main drive system for a vehicle. Such a drive system may include a single prime mover, such as an internal combustion engine. Alternatively, the drive system may include a plurality of prime movers, such as in a hybrid drive system. In such a configuration, the prime movers typically include an internal combustion engine and an electric motor. The drive system may further include a kinetic-energy recovery system that can store and recover energy from the or each prime mover.

Figures 1-4 do not show a variator having, as claimed in claim 1, a chain or a belt. Nevertheless the invention will be understood on the basis of these figures in which:
Figure 1 shows a side elevation view of a dual cavity variator with a take-off drive engaged with the output drive of the variator;
Figure 2 shows an end elevation view of the variator shown in Figure 1 about line I-II;
Figure 3 shows a side elevation of a single cavity variator with a take-off drive engaged with the output drive of the variator.
Figure 4 shows a variation.

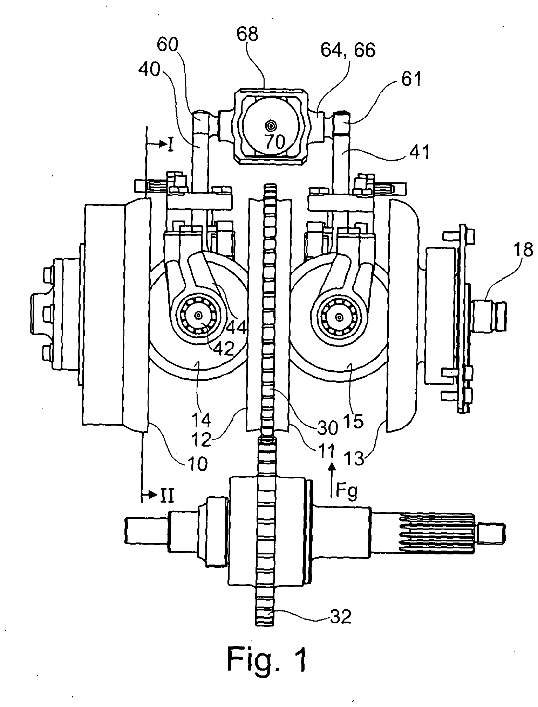

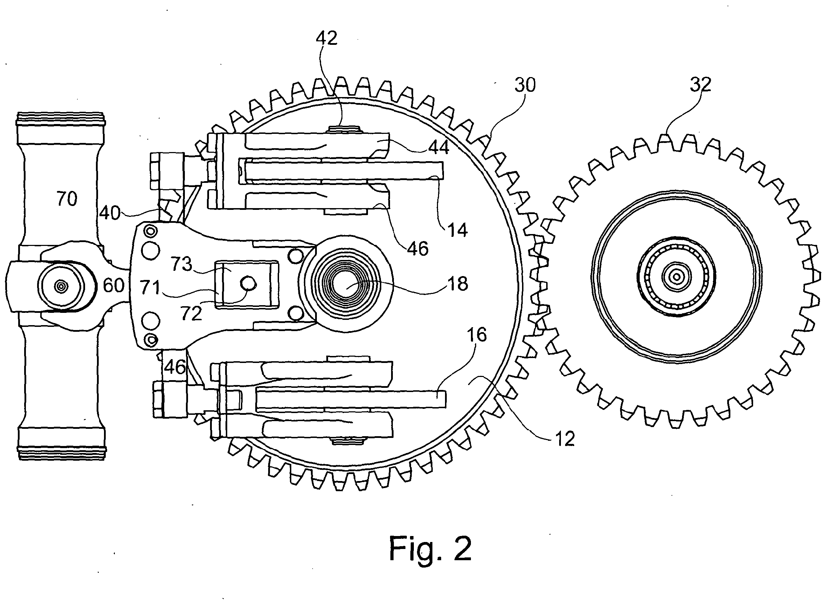

The variator illustrated in Figures 1 and 2 is a variator which, in this case, is torque-controlled. A continuously variable ratio transmission system comprises a variator having a first toroidally-recessed input disc 10 and a facing first toroidally recessed (not shown) output disc 12. Output disc 12 also has a toroidal recess 11 on its opposite side providing a second toroidally recessed output surface. A second toroidally-recessed input disc 13 is provided, defining a second toroidal cavity with the output surface 11. Two rollers 14, 16 are mounted in the first toroidal cavity defined between the opposing toroidally-recessed faces of the input and output discs 10, 12 to transmit drive from the input disc 10 to the output disc 12 with a ratio which is variable by tilting the rollers 14, 16. Two rollers 15, 17 are mounted in the second toroidal cavity defined between the opposing toroidally-recessed faces of the input and output discs 11, 13 to transmit drive from the input disc 11 to the output disc 13 with a ratio which is variable by tilting the rollers 15, 17.

The output disc 12 is provided with teeth 30 on the circumferential surface of disc 12 whereby drive may be taken through a take-off drive on a layshaft parallel to the variator axis, for example a gear 32. A radial force Fg in the direction shown in Figure 1 is generated which may impart a bending moment to the input shaft and cause the more distant parts of the input surfaces 10, 13 and the output surfaces 12, 11 to bow or splay.

The rollers are mounted in such a way that the force Fg is perpendicular to a plane through all the roller-disc contact points when the variator is at a -1.0 ratio (the negative value indicating that there is a reversal in the direction of rotation between the input and output). With this orientation, the roller-disc contact points are located on the neutral axis of the variator shaft such that the normal contact forces are not substantially affected by the radial force Fg and each roller contact bears an equal proportion of the applied end-load force.

If the roller-disc contacts were orientated away from the plane perpendicular to force Fg, the rollers more distant from the meshing of gears 30 and 32 would be subject to a lesser contact force and those rollers nearer to the meshing gears 30, 32 would experience a higher contact force, presenting imbalance and poorer performance.

The input disc 10 is connected to, and rotates with, a system input shaft 18. The variator provides an output via an output shaft (not shown) which may be tubular and which is connected to the output disc 12 and arranged coaxially with, and around, the input shaft 18. The output disc 12 having the first output surface and the second output surface provides the output drive of the variator and is mounted on an output shaft.

The transmission is housed in a generally tubular casing (not shown) which supports the outer section of the input shaft. The output shaft is inboard of the casing..

The roller 14 is rotatably mounted in a roller carrier 40. Each roller 14, 16 and 15, 17 is similarly mounted. The roller carrier 40 comprises a roller carriage 44, 46 for roller 14 and a corresponding roller carriage for roller 16 in the first toroidal cavity. Roller carrier 41 comprises similar roller carriages for rollers 15, 17 in the second toroidal cavity. The rollers 14, 16 and 15, 17 are each mounted by means of a stub axle 42 rotatably mounted in a roller carriage defined by opposed planar support plates 44, 46. The mounting of the rollers is numbered only on one roller for illustrative purposes and in the interests of clarity. The rollers are mounted on the carriers 40, 41 via spherical bearings, for example Rose bearings. The roller carriers 40, 41 each carry two rollers and comprise a cross-bar 48, 49 which is pivotally mounted. Cross-bar 48 links the two rollers 14, 16 in the first cavity and cross-bar 49 links the two rollers 15, 17 in the second cavity. The pivot point of each carrier 40, 41 is located mid-way between the centre points of the two spherical bearings which carry the two rollers. Suitably, the pivot point comprises a pivot pin 72 which is mounted in a block 73 received in a slot 71 of the same width as the diameter of the pivot pin but elongated in the radial direction with respect to the rotational axis of the variator. The slot is provided in a mounting lug which projects into the variator into the space between the input and output discs 10, 12 for carrier 40 and 11, 13 for carrier 41. The carriers 40 and 41 pivot about an axis which is parallel to the variator axis.

The cross-bars 48, 49 are each provided with an actuating arm 60, 61 which projects in a radial direction from the variator rotational axis in a direction perpendicular to the axis of the cross-bars 48, 49. The end of the arms 60, 61 which project out of the variator housing are have the shape of an open-ended spanner for direct mechanical engagement with the mechanical linkage 64.

The mechanical linkage 64 comprises a linking lever 66 mounted for pivoting about a pivot point 68 and is operatively linked to the carriers 40, 41 through arms 60, 61. The linking lever 66 is movable in a direction perpendicular to the line of the lever 66 and in a line which is parallel to a tangent of the disc 12. The linking lever 66 enables the reaction torque from one cavity to be balanced or equalized with the reaction torque from the other cavity by rotating about pivot point 68, whereby the ends of the linking lever 66 rotate and move the arms 60, 61 in a plane perpendicular to the variator axis to balance the reaction torques from the cavities. Actuator 70 is preferably a hydraulic actuator and the stroke of the cylinder acts to provide a limiting mechanism for travel of the linking lever 66 in the direction parallel to a tangent of the disc 12.

As the cross bars 48, 49 pivot, one of the rollers 14, 15 in each cavity is pushed and the other 16, 17 is pulled, both with equal force. The carriers 40, 41 may move radially away from and toward the variator axis, which ensures that the roller control forces within each cavity are equalised. Limitations associated with practical manufacturing and assembly processes make accurate control of roller positions, and hence disc-roller contact conditions difficult in low cost variators. Therefore force equalisation between different rollers is important especially in low-cost assemblies, where the manufacture of the components is likely to be less accurate or where wider tolerances are specified. The radial movement of the pivot of the carriers 40, 41 allows the carriers to move to a position in which a force generated by the different rollers attached to that carrier which arises from manufacturing differences will be reduced and desirably eliminated.

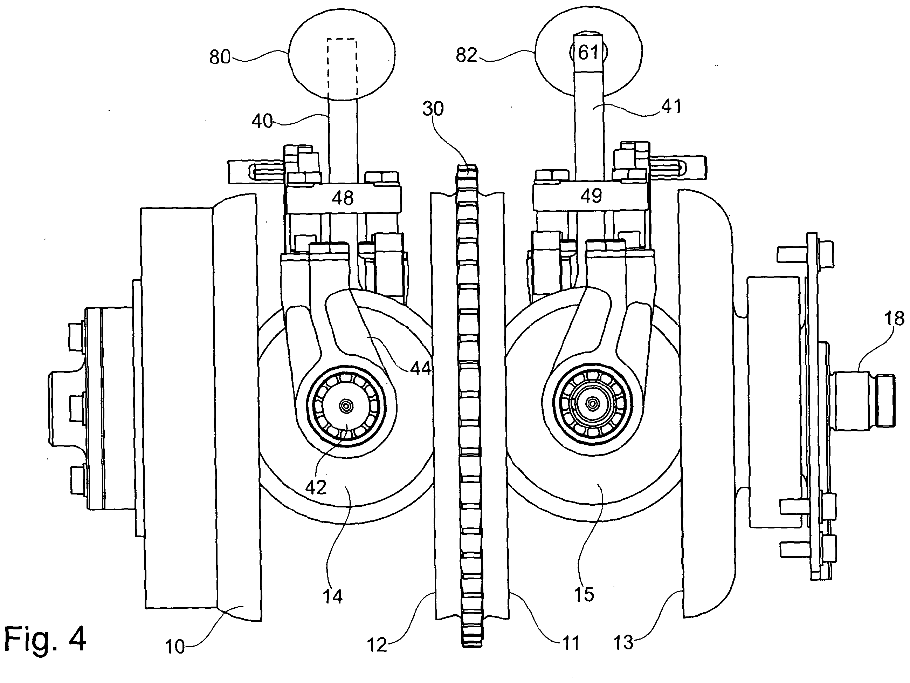

In a variation shown in Figure 4, the linkage is omitted, and each arm 60, 61 is independently actuated by an individual actuator 80, 82.

Figure 2 shows a limiting mechanism of a roller carrier comprising a slot 71 in the carrier 60 and a pin 72 mounted on the housing of the variator and engaged with the slot 71 through a block 73 which is pivotally mounted on the pin 72 and slidable along the slot 71 in a direction which is radial or non-radial relative to the axis of the variator.

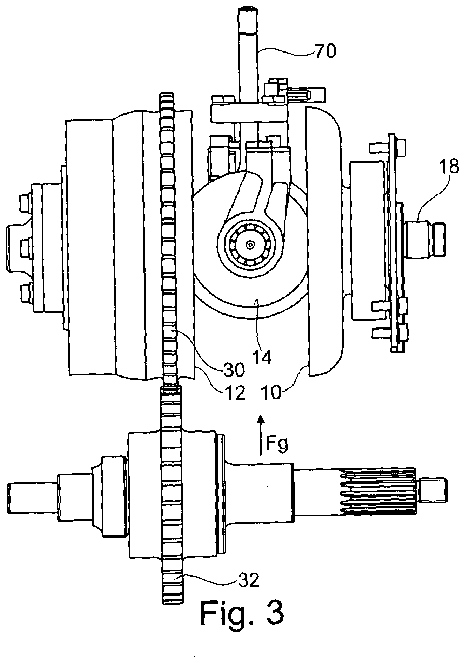

Figure 3 shows a single cavity variator according to the invention. A continuously variable transmission system comprises a variator having a toroidally-recessed input disc 10 and a facing toroidally recessed output disc 12. Two rollers 14, 16 (16 not shown) are mounted in the toroidal cavity defined between the opposing toroidally-recessed faces of the input and output discs 10, 12 to transmit drive from the input disc 10 to the output disc 12 with a ratio which is variable by tilting the rollers 14, 16.

The output disc 12 is provided with teeth 30 on the circumferential surface of disc 12 whereby drive may be taken through a take-off drive on a layshaft parallel to the variator axis, for example a gear 32. A gear force Fg in the direction shown in Figure 3 is generated which imparts a bending moment to the input shaft and cause the more distant parts of the input surface 10 and the output surface 12 to splay apart.

Each roller contacts the input and output disc in such a way that the force Fg is perpendicular to a plane through all the roller-disc contact points when the variator is at a - 1.0 ratio. With this orientation, the roller-disc contact points are located on the neutral axis of the variator shaft such that the normal contact forces are not substantially affected by the radial force Fg and each roller contact bears an equal proportion of the applied end-load force.

The input disc 10 is connected to, and rotates with, a system input shaft 18. The variator provides an output via an output shaft (not shown) which may be tubular and which is connected to the output disc 12 and arranged coaxially with, and around, the input shaft 18. The output disc 12 having the first output surface and the second output surface provides the output drive of the variator and is mounted on an output shaft.

Rollers 14 and 16 may each be actuated by an actuator 70 or may both be actuated by a single actuation mechanism. Suitably hydraulic actuators are employed to provide ratio control. The variator may be torque-controlled as desired.

## Claims

1. A variator comprising an input surface (10, 13) and an output surface (11, 12) defining a toroidal cavity coaxially mounted for rotation on an input shaft defining a variator axis and two rollers (14, 16-Fig.2) in driving engagement with the input and output surfaces, the variator further comprising an output drive (30), a take-off drive operatively engaged with the output surface (11, 12) through the output drive (30) and disposed radially of the variator axis whereby a radial force (Fg) perpendicular to the variator axis is generated by the take-off drive and wherein at one particular ratio within an operating range of the variator the rollers contact the input and output surfaces at contact points so that the contact points lie generally in a plane; and wherein the output drive and take-off drive are operatively engaged by a chain or belt,
**characterized in that**
said plane is substantially perpendicular to the direction of the radial force (Fg).

2. A variator according to claim 1 further comprising a second input surface and a second output surface defining a second toroidal cavity and being coaxially mounted for rotation about the variator axis and a second pair of rollers in driving engagement with the second input and second output surfaces wherein at one particular ratio within the operating range of the variator the rollers in the first cavity contact the first input and output surfaces at first contact points and the rollers in the second cavity contact the second input and output surfaces at second contact points so that the first contact points and second contact points ie generally in a plane which is substantially perpendicular to the direction of the radial force.

3. A variator according to any one of the preceding claims in which the rollers are mounted on at least one carrier.

4. A variator according to claim 2 or 3 in which the rollers in the first cavity and the rollers in the second cavity are rotatably mounted on a control assembly which is adapted to balance a first reaction torque from the first cavity with a second reaction torque from the second cavity.

5. A variator according to claim 4 in which the control assembly comprises a first roller carrier which carries the first pair of rollers in the first cavity, a second roller carrier which carries the second pair of rollers in the second cavity and a mechanical linkage between the first and second roller carriers whereby a first reaction torque from the first cavity and a second reaction torque from the second cavity may be balanced.

6. A variator according to any one of claims 3 or 5 in which the at least one carrier may translate radially within the toroidal cavity to equalize the roller control forces within that cavity.

7. A variator according to any one of claims 3, 5 or 6 in which the at least one carrier is pivotally mounted.

8. A variator according to any one of claims 3 or 5 to 7 in which the at least one carrier comprises a limiting mechanism.

9. A variator according to any one of the preceding claims in which the rollers are adapted to pitch such that the axis of rotation of the roller does not intersect the variator axis and the rollers steer to a new speed ratio at which the axis of rotation of the rollers intersects the variator axis so restoring equilibrium.

10. A variator according to any one claims 1 to 9 which is ratio-controlled.

11. A variator according to any one of the preceding claims in which the rollers are controlled by means of a control member which is capable of actuation at a power of less than 25 watts.

12. A variator according to any one of the preceding claims wherein each cavity comprises two and only two rollers.

13. A variator according to any one of the preceding claims wherein the variator ratio is controlled by tilting or pitching the rollers.

14. A transmission system that transmits power from a prime mover to a driven system, which transmission system includes a variator according to any one of the preceding claims.

15. A transmission system according to claim 14 for an auxiliary drive in a vehicle.

## Patentansprüche

1. Variator, umfassend eine Eingangsfläche (10, 13) und eine Ausgangsfläche (11, 12), die einen toroidalen Hohlraum definieren und zur Rotation auf einer eine Variatorachse definierende Eingangswelle koaxial montiert sind, und zwei Walzen (14, 16 - Fig. 2) in Antriebseingriff mit der Eingangs- und Ausgangsfläche, wobei der Variator ferner einen Ausgangsantrieb (30), einen über den Ausgangsantrieb (30) mit der Ausgangsfläche (11, 12) operativ in Eingriff stehenden Abtrieb, der radial zur Variatorachse angeordnet ist, wodurch eine Radialkraft (Fg) rechtwinklig zur Variatorachse durch den Abtrieb generiert wird, und wobei in einem bestimmten Verhältnis innerhalb eines Betriebsbereichs des Variators die Walzen die Eingangs- und Ausgangsflächen an Kontaktstellen kontaktieren, so dass die Kontaktstellen allgemein in einer Ebene liegen;
und wobei der Ausgangsantrieb und der Abtrieb operativ durch eine Kette oder einen Riemen in Eingriff stehen, **dadurch gekennzeichnet, dass** die Ebene im Wesentlichen rechtwinklig zur Richtung der Radialkraft (Fg) ist.

2. Variator nach Anspruch 1, ferner umfassend eine zweite Eingangsfläche und eine zweite Ausgangsfläche, die einen zweiten toroidalen Hohlraum definieren und zur Rotation um die Variatorachse montiert sind, und ein zweites Paar Walzen in Antriebseingriff mit der zweiten Eingangs- und Ausgangsfläche, wobei bei einem bestimmten Verhältnis im Betriebsbereich des Variators die Walzen im ersten Hohlraum die ersten Eingangs- und Ausgangsflächen an ersten Kontaktstellen kontaktieren und die Walzen im zweiten Hohlraum die zweiten Eingangs- und Ausgangsflächen an zweiten Kontaktstellen kontaktieren, so dass die ersten Kontaktstellen und die zweiten Kontaktstellen allgemein in einer Ebene liegen, die im Wesentlichen rechtwinklig zur Richtung der Radialkraft ist.

3. Variator nach einem der vorstehenden Ansprüche, wobei die Walzen auf mindestens einem Träger montiert sind.

4. Variator nach Anspruch 2 oder 3, wobei die Walzen im ersten Hohlraum und die Walzen im zweiten Hohlraum rotierbar auf einer Steueranordnung montiert sind, die angepasst ist, um ein erstes Reaktionsdrehmoment vom ersten Hohlraum mit einem zweiten Reaktionsdrehmoment vom zweiten Hohlraum auszugleichen.

5. Variator nach Anspruch 4, wobei die Steueranordnung einen ersten Walzenträger, der das erste Paar Walzen im ersten Hohlraum trägt, einen zweiten Walzenträger, der das zweite Paar Walzen im zweiten Hohlraum trägt und eine mechanische Verbindung zwischen dem ersten und dem zweiten Walzenträger umfasst, wodurch ein erstes Reaktionsdrehmoment vom ersten Hohlraum und ein zweites Reaktionsdrehmoment vom zweiten Hohlraum ausgeglichen werden können.

6. Variator nach einem der Ansprüche 3 oder 5, wobei sich der mindestens eine Träger radial im toroidalen Hohlraum verschieben kann, um die Walzensteuerkräfte in diesem Hohlraum zu egalisieren.

7. Variator nach einem der Ansprüche 3, 5 oder 6, wobei der mindestens eine Träger schwenkbar montiert ist.

8. Variator nach einem der Ansprüche 3 oder 5 bis 7, wobei der mindestens eine Träger einen Begrenzungsmechanismus umfasst.

9. Variator nach einem der vorstehenden Ansprüche, wobei die Walzen angepasst sind, so zu nicken, dass die Rotationsachse der Walze die Variatorachse nicht schneidet, und die Walzen zu einem neuen Geschwindigkeitsverhältnis steuern, bei dem die Rotationsachse der Walzen die Variatorachse schneidet, um so das Gleichgewicht wiederherzustellen.

10. Variator nach einem der Ansprüche 1 bis 9, der verhältnisgesteuert ist.

11. Variator nach einem der vorstehenden Ansprüche, wobei die Walzen mittels eines Steuerelements gesteuert werden, das in der Lage ist, bei einer Leistung von unter 25 Watt betätigt zu werden.

12. Variator nach einem der vorstehenden Ansprüche, wobei jeder Hohlraum zwei und nur zwei Walzen umfasst.

13. Variator nach einem der vorstehenden Ansprüche, wobei das Variatorverhältnis durch Neigen oder Nicken der Walzen gesteuert wird.

14. Transmissionssystem, das Leistung von einem primären Bewegungselement zu einem angetriebenen System überträgt, wobei das Transmissionssystem einen Variator nach einem der vorstehenden Ansprüche enthält.

15. Transmissionssystem nach Anspruch 14 für einen Hilfsantrieb in einem Fahrzeug.

## Revendications

1. Variateur comprenant une surface d'entrée (10, 13) et une surface de sortie (11, 12) définissant une cavité toroïdale montée de manière coaxiale pour la rotation sur un arbre d'entrée définissant un axe de variateur et deux rouleaux (14, 16-Fig.2) en prise d'entraînant avec les surfaces d'entrée et de sortie, le variateur comprenant en outre un entraînement de sortie (30), un entraînement de retrait en prise de manière fonctionnelle avec la surface de sortie (11, 12) par l'intermédiaire de l'entraînement de sortie (30) et disposé radialement par rapport à l'axe de variateur, moyennant quoi une force radiale (Fg) perpendiculaire à l'axe de variateur est générée par l'entraînement de retrait et, à un rapport particulier dans une plage de fonctionnement du variateur, lesdits rouleaux entrant en contact avec les surfaces d'entrée et de sortie au niveau des points de contact afin que les points de contact se trouvent généralement dans un plan ;
et ledit entraînement de sortie et ledit entraînement de retrait étant en prise de manière fonctionnelle par une chaîne ou une courroie, **caractérisé en ce que** ledit plan est sensiblement perpendiculaire à la direction de la force radiale (Fg).

2. Variateur selon la revendication 1, comprenant en outre une seconde surface d'entrée et une seconde surface de sortie définissant une seconde cavité toroïdale et étant montées de manière coaxiale pour la rotation autour de l'axe de variateur et une seconde paire de rouleaux en prise d'entraînement avec les secondes surfaces d'entrée et de sortie, à un rapport particulier compris dans les limites de la plage de fonctionnement du variateur, lesdits rouleaux dans la première cavité entrant en contact avec les premières surfaces d'entrée et de sortie au niveau des premiers points de contact et lesdits rouleaux dans la seconde cavité entrent en contact avec les secondes surfaces d'entrée et de sortie au niveau des seconds points de contact afin que les premiers points de contact et lesdits seconds points de contact se trouvant généralement dans un plan sensiblement perpendiculaire à la direction de la force radiale.

3. Variateur selon l'une quelconque des revendications précédentes, lesdits rouleaux étant montés sur au moins un support.

4. Variateur selon la revendication 2 ou 3, lesdits rouleaux dans la première cavité et lesdits rouleaux dans la seconde cavité étant montés de manière rotative sur un ensemble de commande qui est conçu pour équilibrer un premier couple de réaction provenant de la première cavité avec un second couple de réaction provenant de la seconde cavité.

5. Variateur selon la revendication 4, ledit ensemble de commande comprenant un premier support de rouleau qui supporte la première paire de rouleaux dans la première cavité, un second support de rouleau qui supporte la seconde paire de rouleaux dans la seconde cavité et une liaison mécanique entre les premier et second supports de rouleaux grâce à quoi un premier couple de réaction de la première cavité et un second couple de réaction de la seconde cavité peuvent être équilibrés.

6. Variateur selon l'une quelconque des revendications 3 ou 5, ledit au moins un support pouvant effectuer une translation radiale à l'intérieur de la cavité toroïdale pour égaliser les forces de commande du rouleau dans cette cavité.

7. Variateur selon l'une quelconque des revendications 3, 5 ou 6, ledit au moins un support étant monté de manière pivotante.

8. Variateur selon l'une quelconque des revendications 3 ou 5 à 7, ledit au moins un support comprenant un mécanisme de limitation.

9. Variateur selon l'une quelconque des revendications précédentes, lesdits rouleaux étant adaptés pour tanguer de sorte que l'axe de rotation du rouleau ne croise pas l'axe du variateur et lesdits rouleaux s'orientant vers un nouveau rapport de vitesse pour lequel l'axe de rotation des rouleaux croise l'axe du variateur, rétablissant ainsi l'équilibre.

10. Variateur selon l'une quelconque des revendications 1 à 9, qui est à rapport commandé.

11. Variateur selon l'une quelconque des revendications précédentes, lesdits rouleaux étant commandés au moyen d'un élément de commande pouvant être actionné à une puissance inférieure à 25 watts.

12. Variateur selon l'une quelconque des revendications précédentes, chaque cavité comprenant deux et uniquement deux rouleaux.

13. Variateur selon l'une quelconque des revendications précédentes, ledit rapport de variateur étant commandé par l'inclinaison ou le tangage des rouleaux.

14. Système de transmission qui transmet l'énergie d'un moteur principal à un système entraîné, ledit système de transmission comprenant un variateur selon l'une quelconque des revendications précédentes.

15. Système de transmission selon la revendication 14 pour un entraînement auxiliaire dans un véhicule.
